# FASCICULE DE BREVET EUROPEEN

(11) **EP 2 791 714 B1**
(45) Date de publication et mention de la délivrance du brevet: **21.11.2018**
(21) Numéro de dépôt: 12813929.2
(22) Date de dépôt: 14.12.2012
(51) Int. Cl.: G01V 8/10, G01V 3/00, G01V 15/00

(54) **DISPOSITIF DE DÉTECTION ET/OU DE SURVEILLANCE D'OBJETS OPTIQUEMENT INVISIBLES**
VORRICHTUNG ZUR ERKENNUNG UND/ODER ÜBERWACHUNG VON NICHT SICHTBAREN GEGENSTÄNDEN
DETECTION AND/OR SURVEILLANCE DEVICE FOR OPTICALLY INVISIBLE OBJECTS

(30) Priorité: 14.12.2011 FR 1161613
(43) Date de publication de la demande: 22.10.2014
(73) Titulaire: Société Plymouth Française, 69320 Feyzin (FR)
(72) Inventeur: SAAD, Mounir, F-67000 Strasbourg (FR); ARNAUD, Daniel, F-42100 Saint Etienne (FR)
(74) Mandataire: Verriest, Philippe
(86) Numéro de dépôt international: PCT/FR2012/052945
(87) Numéro de publication internationale: WO 2013/088092

(56) Documents cités:
- FR-A1- 2 776 135
- JP-A- 5 001 789
- US-A1- 2003 231 020

## Description

La présente invention concerne un dispositif de détection et/ou de surveillance d'objets optiquement invisibles.

La difficulté d'obtenir des informations sur la présence, le tracé et la nature de canalisations ou de lignes enterrées tient à ce que, la plupart du temps, rien n'est visible à l'extérieur et que les plans existants se révèlent souvent imprécis, incomplets, voire quelquefois erronés ou inexistants.

Il importe, pour un gain de temps et de coûts mais aussi de sécurité, de pouvoir détecter la présence de telles canalisations et lignes, et de les localiser avec précision, sans creuser le sol, ni détruire des ouvrages, à l'occasion de travaux ultérieurs. D'une façon générale, les procédés utilisés doivent être simples à mettre en oeuvre par du personnel de chantier de qualification modeste. En outre, l'appareillage pour la mise en oeuvre de ces procédés de détection doit être robuste et fiable et son coût doit rester inférieur à l'investissement que nécessiterait la mise à jour par fouille des ouvrages enterrés ou de leur grillage avertisseur pour s'assurer de leur présence.

Plusieurs procédés peuvent être utilisés pour réaliser la détection de canalisations enterrées.

La détection par voie électromagnétique est la méthode la plus utilisée. Cette détection électromagnétique peut être effectuée en injectant, à l'aide d'un générateur de courant, un signal électrique dans un élément linéaire électriquement conducteur associé à une canalisation à identifier et disposé suivant le tracé de cette dernière, et ce via des boîtiers de connexion installés à distances régulières le long de la canalisation pour servir de points d'accès, et en utilisant un détecteur électromagnétique agencé pour capter un champ électromagnétique créé par un courant alternatif circulant dans l'élément électriquement conducteur.

De façon connue en soi, l'élément électriquement conducteur est recouvert par une gaine cylindrique en matériau électriquement isolant et est fixé sur la canalisation à identifier à l'aide de moyens de fixation, tels que par exemple des circlips, des bandes auto-agrippantes, ou des bandes adhésives.

De tels moyens de fixation autorisent, pour la plupart, un déplacement de l'élément électriquement conducteur sur la surface extérieure de l'objet optiquement invisible à identifier, et ce en particulier lorsque l'objet optiquement invisible est de section circulaire. Ces mouvements de l'élément électriquement conducteur peuvent conduire à un positionnement imprécis de l'élément électriquement conducteur, et donc à une détection imprécise et malaisée de l'objet optiquement invisible associé. JP 5 001789 A divulgue un dispositif de détection d'objets enterrés comprenant des moyens de fixation.

Or, compte tenu de l'évolution drastique des normes de précision en matière de détection d'objet optiquement invisible, il est nécessaire d'assurer un positionnement optimal de l'élément électriquement conducteur, y compris après enfouissement de l'objet optiquement invisible associé.

La présente invention vise à remédier à ces inconvénients.

Le problème technique à la base de l'invention consiste donc à fournir un dispositif de détection et/ou de surveillance d'objets optiquement invisibles qui soit de structure simple et économique, tout en assurant un positionnement optimal du dispositif sur un objet à surveiller et/ou à détecter.

A cet effet, la présente invention concerne un dispositif de détection et/ou de surveillance d'objets optiquement invisibles selon la revendication 1. Des autres modes de réalisation sont présentés dans les revendications dépendantes.

La structure de la première face de la gaine isolante et la présence des premiers moyens d'accrochage assurent une stabilité du dispositif de détection et/ou de surveillance sur l'objet optiquement invisible associé, et ce en limitant les risques de déplacement du dispositif lors de l'enfouissement de l'objet associé. Il en résulte un positionnement final optimal du dispositif de détection et/ou de surveillance. Par exemple, lorsque l'objet optiquement invisible associé est de section circulaire, tel qu'une canalisation, le dispositif selon l'invention permet d'assurer un positionnement optimal et stable de l'élément linéaire le long de la génératrice supérieure de l'objet optiquement invisible.

Ainsi, lorsque l'élément linéaire est électriquement conducteur, le dispositif selon l'invention assure une détection par voie électromagnétique aisée et précise de l'objet optiquement invisible associé.

Lorsque l'élément linéaire est optiquement conducteur, et est plus particulièrement une fibre optique, toute rupture du dispositif selon l'invention, et donc de l'élément linéaire, permet d'une part d'informer immédiatement un opérateur de la rupture du dispositif, et d'autre part de localiser avec précision l'emplacement de la zone de rupture en analysant par exemple des valeurs caractéristiques du rayon lumineux traversant l'élément linéaire optiquement conducteur.

Par conséquent, la structure du dispositif selon l'invention, en assurant un positionnement optimal de ce dernier sur la génératrice supérieure d'une canalisation, garantit une rupture du dispositif selon l'invention, et plus particulièrement de l'élément linéaire optiquement conducteur, lors de la plupart des agressions de la canalisation, par exemple par le godet d'une pelleteuse. Le dispositif selon l'invention permet donc à un opérateur de connaître précisément l'état d'une canalisation.

Il doit être noté que la première face peut être rugueuse ou présenter des aspérités de surface, sans pour autant que cette définition aille à l'encontre de la caractéristique selon laquelle la première face s'étend sensiblement selon un plan.

Selon la présente invention, le dispositif de détection et/ou de surveillance comprend des deuxièmes moyens d'accrochage ménagés sur la deuxième face de la gaine isolante, les deuxièmes moyens d'accrochage comportant une première série de stries longitudinales et une deuxième série de stries longitudinales disposées respectivement de part et d'autre de la deuxième portion sensiblement plane. Ainsi, quelle que soit l'orientation de la gaine isolante par rapport à l'objet optiquement invisible associé, le dispositif de détection et/ou de surveillance comprendra des première et deuxième séries de stries longitudinales en regard de cet objet.

Le dispositif de détection et/ou de surveillance peut par exemple comprendre une pluralité d'éléments linéaires électriquement conducteurs. Ces dispositions permettent d'assurer, en cas de coupure de l'un des éléments linéaires, la circulation d'un courant électrique le long du dispositif via un autre élément linéaire, et donc l'identification de l'objet optiquement invisible associé.

Selon un mode de réalisation de l'invention, le dispositif comprend au moins un élément linéaire optiquement conducteur, tel qu'une une fibre optique, et au moins un élément linéaire électriquement conducteur, tel qu'un fil métallique. Ces dispositions permettent d'une part d'assurer une identification et un suivi de l'objet optiquement invisible associé, et d'autre part d'informer immédiatement un opérateur d'une rupture du dispositif.

De toute façon l'invention sera bien comprise à l'aide de la description qui suit en référence au dessin schématique annexé représentant, à titre d'exemples non limitatifs, plusieurs formes d'exécution de ce dispositif de détection et/ou de surveillance.
Figure 1 est une vue en perspective d'un dispositif de détection et/ou de surveillance selon un premier mode de réalisation l'invention.
Figure 2 est une vue en coupe transversale du dispositif de détection et/ou de surveillance de la figure 1.
Figure 3 est une vue en coupe transversale du dispositif de détection et/ou de surveillance de la figure 1 en position sur une canalisation de petit diamètre.
Figure 4 est une vue en coupe transversale du dispositif de détection et/ou de surveillance de la figure 1 en position sur une canalisation de grand diamètre.
Figure 5 est une vue en coupe transversale d'un dispositif de détection et/ou de surveillance selon un deuxième mode de réalisation.
Figure 6 est une vue en coupe transversale d'un dispositif de détection et/ou de surveillance selon un troisième mode de réalisation.
Figure 7 est une vue en perspective d'un dispositif de détection et/ou de surveillance selon un quatrième mode de réalisation.

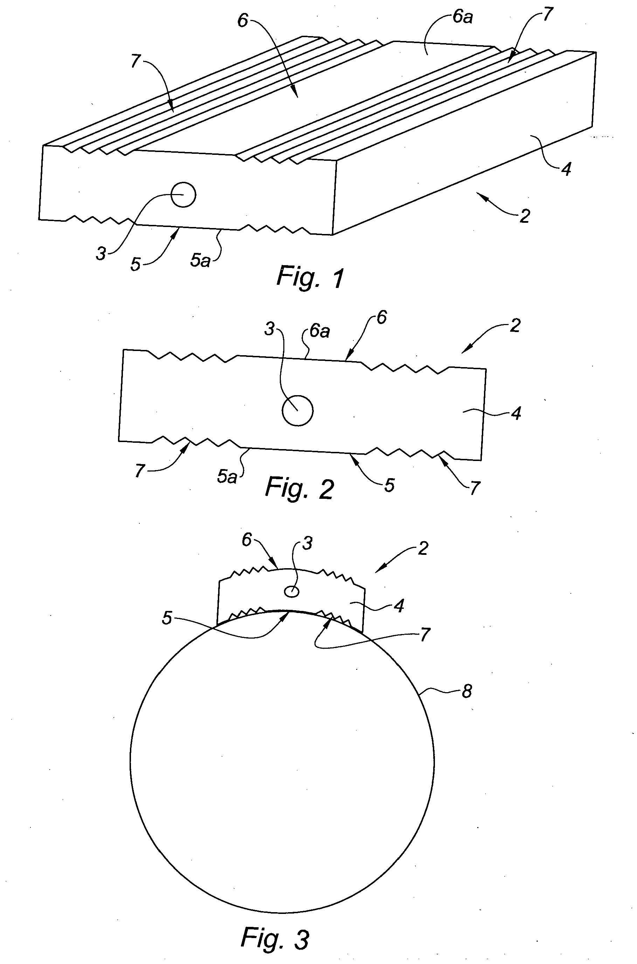

Les figures 1 à 4 représentent un dispositif de détection et/ou de surveillance 2 d'objets optiquement invisibles, tels que des canalisations enterrées, des systèmes d'avertissement ou des objets enfouis dans le sol ou noyés dans un ouvrage de génie civil. Le dispositif de détection et/ou de surveillance 2 est destiné à être monté sur les objets optiquement invisibles, et disposé sensiblement parallèlement à la direction générale desdits objets.

Comme montré sur les figures 1 et 2, le dispositif de détection et/ou de surveillance 2 comprend un élément linéaire 3 électriquement ou optiquement conducteur s'étendant longitudinalement, et une gaine isolante 4 recouvrant l'élément linéaire 3.

L'élément linéaire 3 peut être un fil métallique, de préférence en acier inoxydable lorsque l'on souhaite identifier et suivre un objet optiquement invisible, ou une fibre optique lorsque l'on souhaite surveiller un objet optiquement invisible. La gaine isolante 4 peut par exemple être réalisée en polypropylène.

Comme montré sur la figure 1, la gaine isolante 4 est sensiblement parallélépipédique, et présente ainsi de préférence une section sensiblement rectangulaire. La gaine isolante 4 comporte une première face 5 et une deuxième face 6 opposée à la première face 5. Les première et deuxième faces 5, 6 sont sensiblement parallèles et présentent chacune une portion centrale 5a, 6a sensiblement plane.

Le dispositif de détection et/ou de surveillance 2 comprend en outre une pluralité de stries d'accrochage longitudinales 7 ménagées sur chacune des première et deuxième faces 5, 6 de la gaine isolante 4 à proximité des bords latéraux de cette dernière. En conditions d'utilisation, les stries d'accrochage 7, ménagées sur la face de la gaine isolante 4 tournée vers l'objet à détecter et/ou surveiller, sont agencées pour coopérer avec la surface extérieure de l'objet afin d'améliorer la stabilité du dispositif par rapport à l'objet, et les stries d'accrochage 7, ménagées sur la face de la gaine isolante 4 tournée à l'opposé de l'objet à détecter et/ou surveiller, sont agencées pour coopérer avec le remblais, tel que de la terre, disposé au dessus du dispositif afin d'améliorer la stabilité du dispositif par rapport au remblais.

Le dispositif de détection et/ou de surveillance 2 comprend également des moyens de fixation agencés pour fixer la gaine isolante 4 sur la surface extérieure des objets à identifier.

Selon une première forme de réalisation, les moyens de fixation comportent des moyens adhésifs disposés sur la première face 5 de la gaine isolante 4. Les moyens adhésifs comprennent par exemple une masse adhésive disposée sur la première face 5 de la gaine isolante 4 et un film de protection disposé de manière amovible sur la masse adhésive.

Selon une deuxième forme de réalisation, les moyens de fixation comportent une pluralité d'organe de fixation, tels que par exemple des circlips, des bandes auto-agrippantes, ou des bandes adhésives, destinés à être montés autour de l'objet optiquement invisible associé et décalés longitudinalement le long de ce dernier.

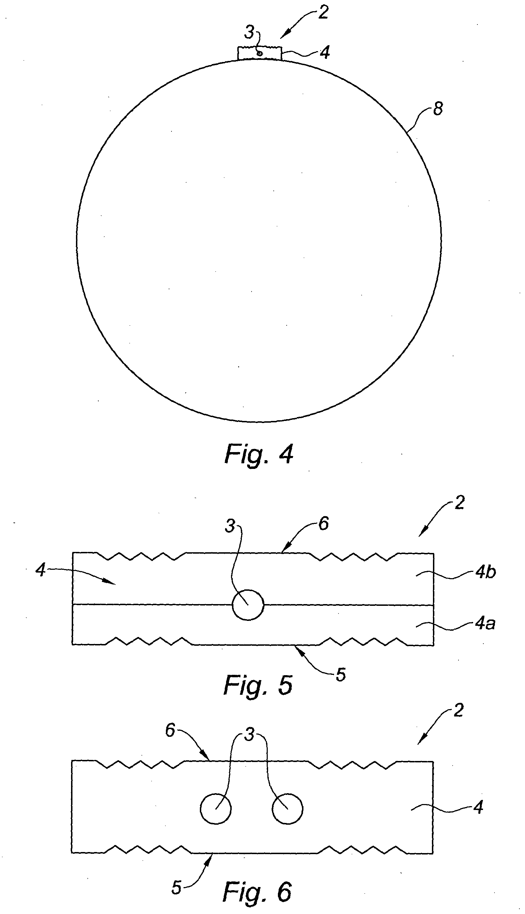

Les figures 3 et 4 représentent le dispositif de détection et/ou de surveillance 2 en position sur une canalisation 8 respectivement de petit diamètre et de grand diamètre. Comme montré plus particulièrement sur la figure 3, la gaine isolante 4 est déformable de manière à augmenter la surface de contact entre la première face 5 et la canalisation 8, afin d'améliorer encore la stabilité du dispositif 2.

En outre, comme montré sur les figures 3 et 4, le dispositif de détection et/ou de surveillance 2 est destiné à s'étendre sensiblement selon la génératrice supérieure de la canalisation 8.

Selon un deuxième mode de réalisation de l'invention représenté sur la figure 5, la gaine isolante 4 comprend une première couche 4a formée en un premier matériau et sur laquelle est ménagée la première face 5 de la gaine isolante 4, et deuxième couche 4b disposée sur la première couche 4a et sur laquelle est ménagée la deuxième face 6 de la gaine isolante 4. La deuxième couche 4b est formée en un deuxième matériau différent du premier matériau.

Avantageusement, le premier matériau est apte à favoriser l'adhésion de la gaine isolante 4 sur l'objet optiquement invisible associé. Ces dispositions permettent de se passer de moyens de fixation additionnels, ou du moins d'améliorer encore la stabilité du dispositif de détection et/ou de surveillance 2.

Les première et deuxième parties de la gaine isolante 4 peuvent par exemple être obtenues par co-extrusion de deux polymères de natures différentes.

Selon un troisième mode de réalisation de l'invention représenté sur la figure 6, le dispositif de détection et/ou de surveillance 2 comprend deux éléments linéaires 3 décalés latéralement l'un de l'autre et recouverts par la gaine isolante 4. Les deux éléments linéaires 3 peuvent être par exemple deux éléments électriquement conducteurs, deux éléments optiquement conducteurs, ou encore un élément électriquement conducteur et un élément optiquement conducteur.

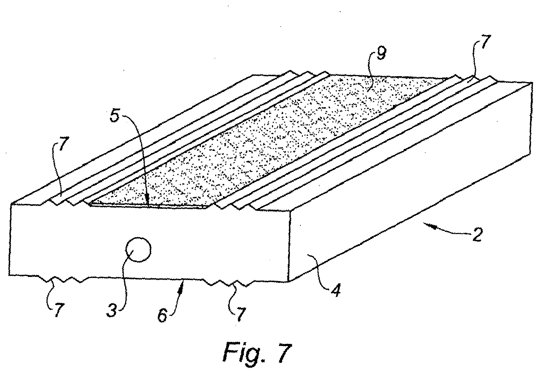

Selon un quatrième mode de réalisation de l'invention représenté sur la figure 7, les stries d'accrochage 7 font saillie respectivement des première et deuxième faces 5, 6 de la gaine isolante 4, et les moyens de fixation comportent une masse adhésive 9 disposée sur la portion centrale 5a de la première face 5 de la gaine isolante 4.

Comme il va de soi, l'invention ne se limite pas aux seules formes d'exécution de ce dispositif de détection et/ou de surveillance, décrites ci-dessus à titre d'exemples, elle en embrasse au contraire toutes les variantes de réalisation incluses dans les revendications qui suivent.

## Revendications

1. Dispositif de détection et/ou de surveillance (2) d'objets optiquement invisibles, tels que des canalisations enterrées, des systèmes d'avertissement ou des corps enfuis dans un sol ou noyés dans un ouvrage de génie civil, ce dispositif étant destiné à être monté sur lesdits objets et disposé sensiblement parallèlement à la direction générale desdits objets, ce dispositif comportant :
- au moins un élément linéaire (3) électriquement ou optiquement conducteur, l'au moins un élément linéaire (3) s'étendant longitudinalement,
- une gaine isolante (4) recouvrant l'au moins un élément linéaire (3), la gaine isolante (4) comportant au moins une première face (5) destinée à être montée sur lesdits objets et au moins une deuxième face (6) opposée à la première face (5), les première et deuxième faces (5, 6) étant sensiblement parallèles, la première face (5) s'étendant sensiblement selon un plan et comportant une première portion sensiblement plane (5a), la deuxième face (6) comprenant une deuxième portion sensiblement plane (6a) sensiblement parallèle à la première portion sensiblement plane (5a),
- des premiers moyens d'accrochage ménagés sur la première face (5) de la gaine isolante (4) et agencés pour coopérer avec la surface extérieure desdits objets, le dispositif **caractérisé en ce que** les premiers moyens d'accrochage comprennent une première série de stries longitudinales (7) et une deuxième série de stries longitudinales (7) disposées respectivement de part et d'autre de la première portion sensiblement plane (5a), les première et deuxième séries de stries longitudinales appartenant aux premiers moyens d'accrochage étant ménagées respectivement à proximité des bords latéraux de la gaine isolante (4), et
- des deuxièmes moyens d'accrochage ménagés sur la deuxième face (6) de la gaine isolante (4), les deuxièmes moyens d'accrochage comportant une première série de stries longitudinales (7) et une deuxième série de stries longitudinales (7) disposées respectivement de part et d'autre de la deuxième portion sensiblement plane (6a), les première et deuxième séries de stries longitudinales appartenant aux deuxièmes moyens d'accrochage étant ménagées respectivement à proximité des bords latéraux de la gaine isolante.

2. Dispositif selon la revendication 1, dans lequel l'au moins un élément linéaire (3) s'étend entre les première et deuxième portions sensiblement planes (5a, 6a), et est disposé sensiblement de manière équidistante par rapport aux première et deuxième portions sensiblement planes (5a, 6a).

3. Dispositif selon la revendication 1 ou 2, lequel comprend des moyens de fixation agencés pour fixer la gaine isolante (4) sur la surface extérieure desdits objets.

4. Dispositif selon la revendication 3, dans lequel les moyens de fixation comportent des moyens adhésifs disposés sur au moins la première face (5) de la gaine isolante (4).

5. Dispositif selon la revendication 4, dans lequel les moyens adhésifs comprennent une masse adhésive (9) disposée sur la première face (5) de la gaine isolante (4), et un film de protection disposé de manière amovible sur la masse adhésive.

6. Dispositif selon l'une des revendications 1 à 5, dans lequel la gaine isolante (4) comprend au moins une première partie (4a) sur laquelle est ménagée la première face (5) de la gaine isolante, la première partie (4a) étant formée en un premier matériau apte à favoriser l'adhésion de la gaine isolante (4) sur l'objet optiquement invisible associé.

7. Dispositif selon la revendication 6, dans lequel la gaine isolante (4) comprend une deuxième partie (4b) sur laquelle est ménagée la deuxième face (6) de la gaine isolante, la deuxième partie (4b) étant formée en un deuxième matériau différent du premier matériau.

8. Dispositif selon l'une des revendications 1 à 7, lequel comprend au moins un élément linéaire (3) électriquement conducteur.

9. Dispositif selon l'une des revendications 1 à 8, lequel comprend au moins un élément linéaire (3) optiquement conducteur.

10. Dispositif selon l'une des revendications 1 à 9, dans lequel au moins la première et/ou la deuxième face (5, 6) de la gaine isolante (4) comprend une zone de marquage agencée pour recevoir des inscriptions.

11. Ensemble comportant une pluralité de dispositifs de détection et/ou de surveillance (2) selon l'une des revendications 1 à 10, et au moins un boîtier de connexion dans lequel sont logés des moyens de connexion agencés pour relier les éléments linéaires d'au moins deux dispositifs de détection et/ou de surveillance adjacents.

## Patentansprüche

1. Vorrichtung zur Detektion und/oder zur Überwachung (2) von optisch nicht sichtbaren Objekten, wie etwa erdverlegten Rohrleitungen, Warnsystemen oder Körpern, die in einem Boden vergraben oder in einem Bauwerk eingebettet sind, wobei diese Vorrichtung dazu vorgesehen ist, an den Objekten montiert und im Wesentlichen parallel zur allgemeinen Richtung der Objekte ausgerichtet zu werden, wobei diese Vorrichtung umfasst:
- mindestens ein elektrisch oder optisch leitendes lineares Element (3), wobei sich das mindestens eine lineare Element (3) längs erstreckt,
- eine isolierende Ummantelung (4), die das mindestens eine lineare Element (3) bedeckt, wobei die isolierende Ummantelung (4) mindestens eine erste Seite (5) umfasst, die dazu vorgesehen ist, an den Objekten montiert zu werden, und mindestens eine zweite Seite (6), die der ersten Seite (5) gegenüberliegt, wobei die erste und zweite Seite (5, 6) im Wesentlichen parallel sind, wobei sich die erste Seite (5) im Wesentlichen entlang einer Ebene erstreckt und einen ersten im Wesentlichen ebenen Abschnitt (5a) umfasst, wobei die zweite Seite (6) einen zweiten im Wesentlichen ebenen Abschnitt (6a) umfasst, der im Wesentlichen zum ersten im Wesentlichen ebenen Abschnitt (5a) parallel ist,
- erste Verankerungsmittel, die auf der ersten Seite (5) der isolierenden Ummantelung (4) ausgestaltet und dafür eingerichtet sind, mit der Außenfläche der Objekte zusammenzuwirken, wobei die Vorrichtung **dadurch gekennzeichnet ist, dass** die ersten Verankerungsmittel eine erste Serie von Längsrillen (7) und eine zweite Serie von Längsrillen (7) umfassen, die jeweils auf beiden Seiten des ersten im Wesentlichen ebenen Abschnitts (5a) angeordnet sind, wobei die erste und zweite Serie von Längsrillen, die zu den ersten Verankerungsmitteln gehören, jeweils in Nähe der Seitenkanten der isolierenden Ummantelung (4) ausgestaltet sind, und
- zweite Verankerungsmittel, die auf der zweiten Seite (6) der isolierenden Ummantelung (4) ausgestaltet sind, wobei die zweiten Verankerungsmittel eine erste Serie von Längsrillen (7) und eine zweite Serie von Längsrillen (7) umfassen, die jeweils auf beiden Seiten des zweiten im Wesentlichen ebenen Abschnitts (6a) angeordnet sind, wobei die erste und zweite Serie von Längsrillen, die zu den zweiten Verankerungsmitteln gehören, jeweils in Nähe der Längskanten der isolierenden Ummantelung ausgestaltet sind.

2. Vorrichtung nach Anspruch 1, wobei sich das mindestens eine lineare Element (3) zwischen dem ersten und zweiten im Wesentlichen ebenen Abschnitt (5a, 6a) erstreckt, und in Bezug auf den ersten und zweiten im Wesentlichen ebenen Abschnitt (5a, 6a) in im Wesentlichen gleich weit beabstandeter Weise angeordnet ist.

3. Vorrichtung nach Anspruch 1 oder 2, die Befestigungsmittel umfasst, die dafür eingerichtet sind, die isolierende Ummantelung (4) an der Außenfläche der Objekte zu befestigen.

4. Vorrichtung nach Anspruch 3, wobei die Befestigungsmittel Haftmittel umfassen, die auf mindestens der ersten Seite (5) der isolierenden Ummantelung (4) angeordnet sind.

5. Vorrichtung nach Anspruch 4, wobei die Haftmittel eine Haftmasse (9) umfassen, die auf der ersten Seite (5) der isolierenden Ummantelung (4) angeordnet ist, und einen Schutzfilm, der in entfernbarer Weise auf der Haftmasse angeordnet ist.

6. Vorrichtung nach einem der Ansprüche 1 bis 5, wobei die isolierende Ummantelung (4) mindestens einen ersten Teil (4a) umfasst, an dem die erste Seite (5) der isolierenden Ummantelung ausgestaltet ist, wobei der erste Teil (4a) aus einem ersten Material gebildet ist, das in der Lage ist, die Haftung der isolierenden Ummantelung (4) an dem zugehörigen optisch nicht sichtbaren Objekt zu verbessern.

7. Vorrichtung nach Anspruch 6, wobei die isolierende Ummantelung (4) einen zweiten Teil (4b) umfasst, an dem die zweite Seite (6) der isolierenden Ummantelung ausgestaltet ist, wobei der zweite Teil (4b) aus einem zweiten Material gebildet ist, das sich vom ersten Material unterscheidet.

8. Vorrichtung nach einem der Ansprüche 1 bis 7, die mindestens ein lineares Element (3) umfasst, welches elektrisch leitend ist.

9. Vorrichtung nach einem der Ansprüche 1 bis 8, die mindestens ein lineares Element (3) umfasst, welches optisch leitend ist.

10. Vorrichtung nach einem der Ansprüche 1 bis 9, wobei mindestens die erste und/oder die zweite Seite (5, 6) der isolierenden Ummantelung (4) einen Markierungsbereich umfasst, der dafür eingerichtet ist, Beschriftungen aufzunehmen.

11. Satz, der eine Vielzahl von Detektions- und/oder Überwachungsvorrichtungen (2) nach einem der Ansprüche 1 bis 10, und mindestens eine Anschlussbox umfasst, in der Anschlussmittel untergebracht sind, die dafür eingerichtet sind, die linearen Elemente von mindestens zwei benachbarten Detektions- und/oder Überwachungsvorrichtungen zu verbinden.

## Claims

1. A device for detecting and/or monitoring (2) optically invisible objects, such as underground pipes, warning systems or bodies buried in the ground or embedded in civil engineering works, this device being intended to be mounted on said objects and disposed substantially parallel to the general direction of said objects, this device including:
- at least one electrically or optically conductive linear element (3), the at least one linear element (3) extending longitudinally,
- an insulating sheath (4) covering the at least one linear element (3), the insulating sheath (4) including at least one first face (5) intended to be mounted on said objects and at least one second face (6) opposite to the first face (5), the first and second faces (5, 6) being substantially parallel, the first face (5) extending substantially in a plane and including a first substantially flat portion (5a), the second face (6) comprising a second substantially flat portion (6a) substantially parallel to the first substantially flat portion (5a),
- first gripping means formed on the first face (5) of the insulating sheath (4) and arranged to cooperate with the outer surface of said objects, the device **characterized in that** the first gripping means comprise a first series of longitudinal ridges (7) and a second series of longitudinal ridges (7) disposed respectively on either side of the first substantially flat portion (5a), the first and second series of longitudinal ridges belonging to the first gripping means being formed respectively in the proximity of the lateral edges of the insulating sheath (4), and
- second gripping means formed on the second face (6) of the insulating sheath (4), the second gripping means including a first series of longitudinal ridges (7) and a second series of longitudinal ridges (7) disposed respectively on either side of the second substantially flat portion (6a), the first and second series of longitudinal ridges belonging to the second gripping means being formed respectively in the proximity of the lateral edges of the insulating sheath.

2. The device according to claim 1, wherein the at least one linear element (3) extends between the first and second substantially flat portions (5a, 6a), and is disposed substantially equidistantly relative to the first and second substantially flat portions (5a, 6a).

3. The device according to claim 1 or 2, which comprises fixing means arranged to fix the insulating sheath (4) on the outer surface of said objects.

4. The device according to claim 3, wherein the fixing means include adhesive means disposed on at least the first face (5) of the insulating sheath (4).

5. The device according to claim 4, wherein the adhesive means comprise an adhesive mass (9) disposed on the first face (5) of the insulating sheath (4), and a protection film removably disposed on the adhesive mass.

6. The device according to any of claims 1 to 5, wherein the insulating sheath (4) comprises at least one first part (4a) on which is formed the first face (5) of the insulating sheath, the first part (4a) being formed of a first material capable of promoting the adhesion of the insulating sheath (4) on the associated optically invisible object.

7. The device according to claim 6, wherein the insulating sheath (4) comprises a second part (4b) on which is formed the second face (6) of the insulating sheath, the second part (4b) being formed of a second material different from the first material.

8. The device according to any of claims 1 to 7, which comprises at least one electrically conductive linear element (3).

9. The device according to any of claims 1 to 8, which comprises at least one optically conductive linear element (3).

10. The device according to any of claims 1 to 9, wherein at least the first and/or the second face(s) (5, 6) of the insulating sheath (4) comprise(s) a marking area arranged to receive inscriptions.

11. A set including a plurality of detection and/or monitoring devices (2) according to any of claims 1 to 10, and at least one connection casing in which are housed connection means arranged to connect the linear elements of at least two adjacent detection and/or monitoring devices.
